# EUROPEAN PATENT APPLICATION

(11) **EP 1 947 863 A1**
(43) Date of publication of application: **23.07.2008**
(21) Application number: 05806266.2
(22) Date of filing: 11.11.2005
(51) Int. Cl.: H04N 7/32

(54) **IMAGE DECODING APPARATUS AND METHOD, AND IMAGE ENCODING APPARATUS**

(71) Applicant: Fujitsu Ltd., Kawasaki-shi, Kanagawa 211-8588 (JP)
(72) Inventor: WATANABE, Yasuhiro, Kawasaki-shi Kanagawa 211-8588 (JP); KURODA, Shingo, Yokohama-shi Kanagawa 222-0033 (JP)
(74) Representative: Stebbing, Timothy Charles
(86) International application number: PCT/JP2005/020700
(87) International publication number: WO 2007/055013

(57) **Abstract**

A technique is provided to decode a video stream encoded with motion-compensated prediction techniques, at a high speed and with a low power consumption.

An area setting means (11) determines a read area on a reference picture so as to contain areas pointed by a plurality of motion vectors extracted from a video stream (10). A reference picture reading means (12) reads out, with a continuous access sequence to a memory (2), data of the reference picture corresponding to the read area determined by the area setting means (11), wherein the reference picture is a picture previously decoded and stored in the memory (2). A predicted picture generating means (13) produces a predicted picture based on the data corresponding to the read area which has been read by the reference picture reading means (12). A decoding means (14) reproduces an original picture by using the predicted picture produced by the predicted picture generating means (13).

## Description

### Technical Field

The present invention relates to devices and methods for decoding a video stream, as well as to devices for producing a coded video stream. More particularly, the present invention relates to a device and method for decoding a video stream that is encoded with motion-compensated prediction techniques, as well as to a device for producing such a video stream.

### Background Art

Recent years have seen a growing use of digital video techniques that manipulate motion images as digital signals. MPEG and H.26x are among the standard specifications in this technical field, where MPEG stands for "Moving Picture Experts Group." MPEG-2 offers solutions mainly for broadcast media applications. For a wider range of applications such as mobile phones and network distribution, MPEG-4 and H.264 attract greater interest recently since they provide higher compression ratios.

The technological elements characterizing MPEG and H.26x include a motion-compensated prediction technique that encodes a current picture by using a picture predicted with reference to a preceding picture or both preceding and succeeding pictures. The video data encoded in this way can be decoded also with the motion-compensated prediction technique, which reproduces the original picture by adding difference data given by a coded video stream to predicted picture data, i.e., the data of a picture predicted with reference to previously decoded pictures. Motion compensation is performed usually on the basis of macroblocks, i.e., the areas with a size of 16 pixels by 16 pixels. One or more motion vectors are calculated for each macroblock. The decoding device reproduces the original picture by reading reference picture data in each picture area pointed by those motion vectors and adding thereto difference data given by the coded video stream.

Most implementations of decoder circuits executing the above-described decoding process employ an external memory as temporary storage for decoded pictures. Reference picture data has to be read out of this external memory during the course of a decoding process using motion-compensated prediction. MPEG-2 standard allows a macroblock to be further divided into two partitions for motion estimation purposes. H.264 standard even allows a macroblock to be divided into up to sixteen partitions with a size of 4 pixels by 4 pixels. In the case where such macroblock partitioning is applied, the conventional decoder circuit makes access to the external memory to read out data of each divided reference picture area pointed by motion vectors. This means that memory access occurs more frequently as the number of partitions rises, thus resulting in an increased data traffic between the memory and decoder circuit.

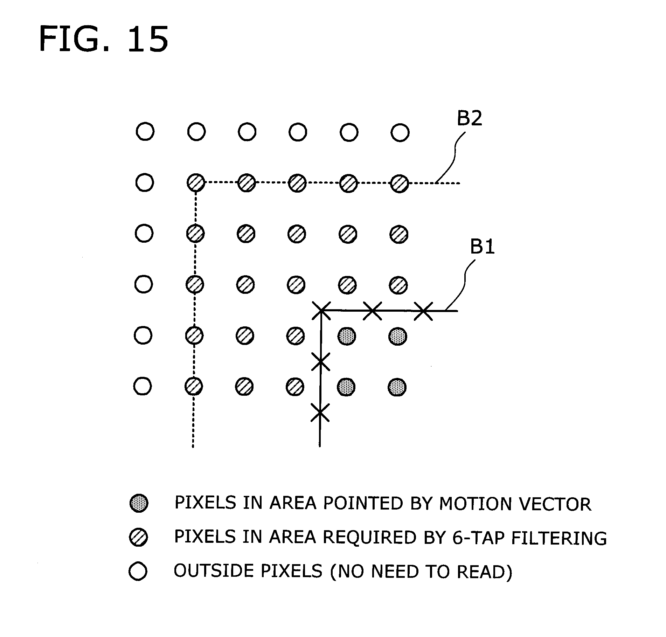

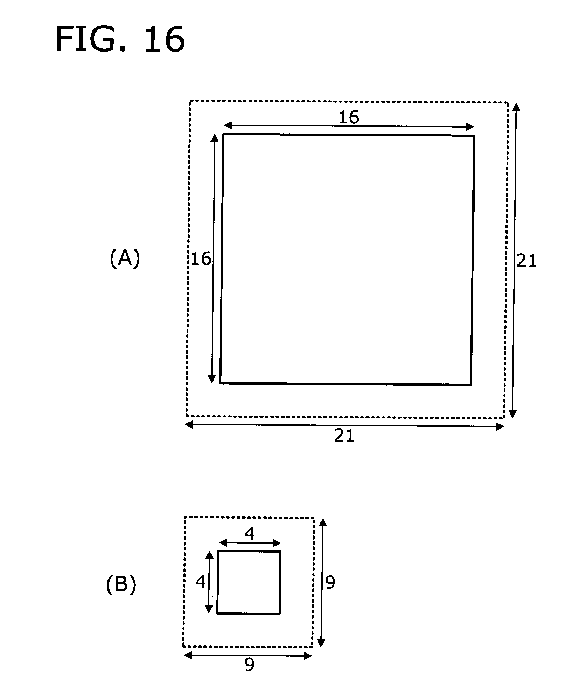

H.264 standard requires in some cases a filtering process with many taps when reading reference pictures for motion compensation. FIG. 15 shows a boundary portion of a reference picture area in the case where filtering is required. FIG. 16 shows the size of reference picture areas in the case where filtering is required.

When motion estimation is performed with a half-pixel accuracy, the boundary of a reference picture area pointed by a motion vector may be located at, for example, B1 of FIG. 15. For 6-tap filtering, the read area on this reference picture has to be expanded by three pixels. FIG. 15 depicts this expanded boundary B2, outside the original boundary B1.

In the case where no partitioning takes place in 16x16 pixel macroblocks, the reference picture areas required to produce a predicted luminance picture have a size of 21 pixels by 21 pixels as shown in FIG. 16(A). To produce one bidirectionally predicted macroblock (256 bytes) of luminance picture in this case, the decoder circuit has to read a maximum of 882 bytes of reference picture data, since 21 [pixel] x 21 [pixel] x 1 [vector] x 2 [prediction direction] makes 882 [byte]. On the other hand, in the case where a macroblock is divided into sixteen subblocks, the decoder circuit has to read 9x9 pixels for each subblock as shown in FIG. 16(B). This means that the maximum amount of reference picture data that has to be read for producing one bidirectionally predicted macroblock of luminance picture swells up to 2592 bytes, since 9 [pixel] x 9 [pixel] x 16 [vector] x 2 [prediction direction] makes 2592 [byte].

As a conventional technique related to the above-described video coding, there is proposed a video coding device that reduces the memory bandwidth requirements for creation of virtual samples by locally determining accuracy of virtual samples in association with each size of unit areas for motion vector estimation (see, for example, Patent Literature 1 listed below). As another conventional technique, there is proposed a decoding device that reduces the capacity of decoded picture memory by reducing the number of pixels of decoded pictures before storing them in memory (see, for example, Patent Literature 2).

### [Patent Literature 1]

Japanese Patent Application Publication No. 2004-48552 (paragraphs [0026] to [0035], FIG. 3)

### [Patent Literature 2]

Japanese Patent Application Publication No. 2000-4442 (paragraphs [0015] to [0022], FIG. 1)

### Disclosure of the Invention

### [Problems to be solved by the Invention]

As discussed earlier, the decoder circuit has to make access to the reference picture memory more frequently when performing motion compensation on a block with a large number of partitions. Furthermore, in the case where the motion compensation involves a filtering process, an increased amount of reference picture data has to be read out of the memory. These factors would be an obstacle to speeding up the decoding process. Raising the operating frequency for the purpose of speeding up would lead to an increased power consumption of the circuit. Moreover, it is not only decoders that suffers the above problems. Encoders share the same problems since they have to read decoded pictures out of memory during the course of encoding a video.

In view of the foregoing, it is an object of the present invention to provide a video decoding device and method that can decode a video stream encoded with motion-compensated prediction techniques, at a high speed and with a low power consumption.

It is another object of the present invention to provide a video coding device that can produce a coded video stream at a high speed and with a low power consumption, using motion-compensated prediction techniques.

### [Means for Solving the Problems]

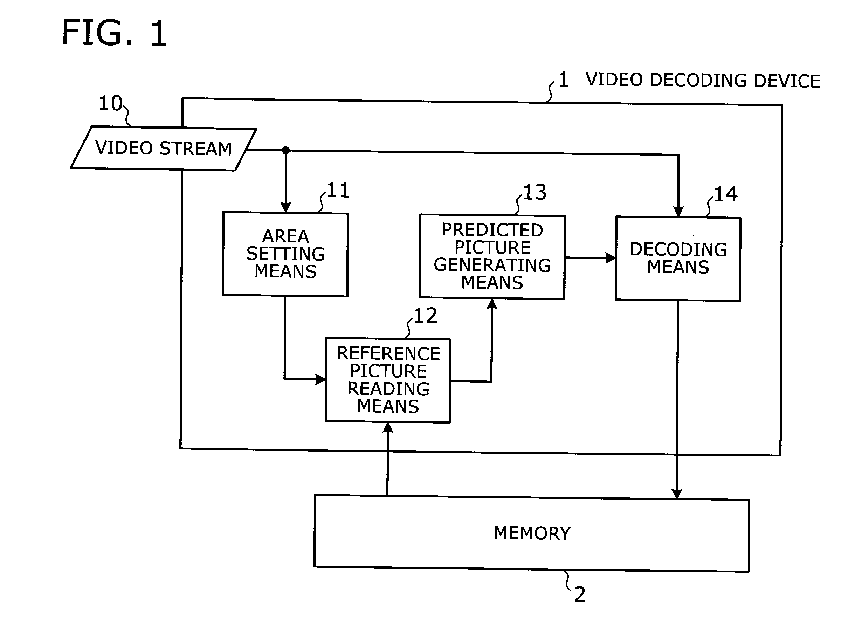

To accomplish the above objects, the present invention provides a video decoding device 1 shown in FIG. 1. This video decoding device 1 is designed to decode a video stream 10 encoded with motion-compensated prediction techniques. The video decoding device 1 includes the following elements: an area setting means 11 for determining a read area on a reference picture so as to contain areas pointed by a plurality of motion vectors extracted from the video stream 10; a reference picture reading means 12 for reading out, with a continuous access sequence to a memory 2, data of the reference picture corresponding to the read area determined by the area setting means 11, the reference picture being a picture previously decoded and stored in the memory 2; a predicted picture generating means 13 for producing a predicted picture based on the data corresponding to the read area which has been read by the reference picture reading means 12; and a decoding means 14 for reproducing an original picture by using the predicted picture produced by the predicted picture generating means 13.

In operation, the memory 2 coupled to the video decoding device 1 is used to store data of previously decoded pictures. The video decoding device 1 reads out those pictures for use reference pictures when producing a predicted picture. The area setting means 11 determines a read area on a reference picture so as to contain areas pointed by a plurality of motion vectors extracted from the video stream. The reference picture reading means 12 reads out data of the reference picture corresponding to the read area determined by the area setting means 11. This read operation is performed in a continuous access sequence to the memory 2. The predicted picture generating means 13 produces a predicted picture based on the data corresponding to the read area which has been read by the reference picture reading means 12. The decoding means 14 reproduces an original picture by using the predicted picture produced by the predicted picture generating means 13.

The present invention further provides a video coding device for encoding video signals by using motion-compensated prediction techniques. This video coding device includes the following elements: a motion estimation means for performing motion estimation on data of a source picture and a reference picture which are read out of a memory; an area setting means for determining a read area on the reference picture so as to contain areas pointed by a plurality of motion vectors calculated from results of the motion-compensated prediction performed by the motion estimation means; a reference picture reading means for reading out, with a continuous access sequence to the memory, data of the reference picture corresponding to the read area determined by the area setting means; a predicted picture generating means for producing a predicted picture based on the data corresponding to the read area which has been read out by the reference picture reading means; a coding means for producing a video stream by performing a coding process on data of the predicted picture produced by the predicted picture generating means and data of the source picture; and a decoding means for decoding pictures encoded by the coding means and storing the decoded pictures in the memory for use as reference pictures.

In operation, the memory coupled to the video coding device is used to store data of source pictures, together with data of pictures decoded previously by the decoding means. The latter pictures are stored for later use as reference pictures. The motion estimation means performs motion estimation on data of a source picture and a reference picture which are read out of the memory. The area setting means determines a read area on the reference picture so as to contain areas pointed by a plurality of motion vectors calculated from results of the motion-compensated prediction performed by the motion estimation means. The reference picture reading means reads out data of the reference picture corresponding to the read area determined by the area setting means. This read operation is performed in a continuous access sequence to the memory. The predicted picture generating means produces a predicted picture based on the data corresponding to the read area which has been read out by the reference picture reading means. The coding means produces a video stream by performing a coding process on data of the predicted picture produced by the predicted picture generating means and data of the source picture. The decoding means decodes pictures encoded by the coding means and stores the decoded pictures in the memory for use as reference pictures.

### [Advantages of the Invention]

According to the video decoding device of the present invention, the area setting means determines a read area on a reference picture so as to contain areas pointed by a plurality of motion vectors extracted from a video stream, and the reference picture reading means performs a continuous access sequence to the memory to read out reference picture data corresponding to the read area determined by the area setting means. Accordingly, it is more likely that the data in reference picture areas pointed by motion vectors can be read out of the memory with a reduced number of clock cycles and with a reduced amount of read data, compared with the case where those areas are read individually. The present invention speeds up the reading of reference picture data for the purpose of producing predicted pictures, without the need for raising the operating frequency, thus making it possible to realize a low-power, high-speed video decoding device.

According to the video coding device of the present invention, the area setting means determines a read area on a reference picture so as to contain areas pointed by a plurality of motion vectors calculated from results of motion-compensated prediction performed by the motion estimation means, and the reference picture reading means performs a continuous access sequence to the memory to read out reference picture data corresponding to the read area determined by the area setting means. Accordingly, it is more likely that the data in reference picture areas pointed by motion vectors can be read out of the memory with a reduced number of clock cycles and with a reduced amount of read data, compared with the case where those areas are read individually. The present invention speeds up the reading of reference picture data for the purpose of producing predicted pictures, without the need for raising the operating frequency, thus making it possible to realize a low-power, high-speed video coding device.

The above and other objects, features and advantages of the present invention will become apparent from the following description when taken in conjunction with the accompanying drawings which illustrate preferred embodiments of the present invention by way of example.

### Brief Description of the Drawings

FIG. 1 is a block diagram giving an overview of a video decoding device according to an embodiment of the present invention.
FIG. 2 is a block diagram showing an internal structure of a decoder LSI chip according to an embodiment of the present invention.
FIG. 3 is a block diagram showing an internal structure of a predicted picture reader/generator.
FIG. 4 shows an example of macroblock partitioning.
FIG. 5 shows how data is read out of reference picture areas corresponding to a macroblock.
FIG. 6 shows how data is read out of reference picture areas in the case where filtering is required.
FIG. 7 shows an example of a large-sized collective read area.
FIG. 8 is a flowchart showing a total process of reading reference picture data suitably for H.264.
FIG. 9 is a flowchart showing a first example process of selecting control and reading reference pictures.
FIG. 10 shows motion vectors of a macroblock, one of which solely points to a distant area while the other vectors can be handled collectively.
FIG. 11 is a flowchart showing a second example process of selecting control and reading reference pictures.
FIG. 12 is a flowchart showing a first example process of reading reference picture data suitably for MPEG-4 simple profile.
FIG. 13 is a flowchart showing a second example process of reading reference picture data suitably for MPEG-4 simple profile.
FIG. 14 is a block diagram showing essential part of an encoder LSI chip according to an embodiment of the present invention.
FIG. 15 shows a boundary portion of a reference picture area in the case where filtering is required.
FIG. 16 shows the size of reference picture areas in the case where filtering is required.

### Best Mode for Carrying Out the Invention

Several embodiments of the present invention will now be described in detail below with reference to the accompanying drawings.

FIG. 1 is a block diagram giving an overview of a video decoding device according to an embodiment of the present invention.

The video decoding device 1 shown in FIG. 1 decodes and decompresses video pictures from a received video stream 10, which was produced with a video compression coding technique using motion-compensated prediction. This video decoding device 1 includes the following elements: an area setting means 11, a reference picture reading means 12, a predicted picture generating means 13, and a decoding means 14. Coupled to the video decoding device 1 is a memory 2 used mainly for storing decoded picture data and other data required in the course of decoding.

Video frames are encoded by using motion-compensated prediction techniques, with reference to a preceding picture or both preceding and succeeding pictures. To decode such video frames, the video decoding device 1 performs a motion compensation process using reference pictures that are previously decoded and stored in the memory 2. The original frame data is reproduced by obtaining difference data from a video stream 10 and adding it to reference picture data. More specifically, the video stream 10 contains motion vectors calculated by a motion estimation process, together with data representing difference components of a picture, relative to its preceding picture or preceding and succeeding pictures. The video decoding device 1 finds those pieces of information in the video stream 10. Since the motion estimation process acts on each divided area of a frame, motion vectors are provided for each such area and for each frame used in the prediction.

The area setting means 11 determines which areas of a reference picture in the memory 2 should be read to obtain reference picture data for motion compensation, based on motion vector data extracted from the video stream 10. More specifically, the area setting means 11 sets a read area so as to contain the areas pointed by a plurality of motion vectors extracted from the video stream 10. The reference picture reading means 12 makes access to the memory 2 with a continuous access sequence to read out reference picture data in the read area that the area setting means 11 specifies.

The predicted picture generating means 13 produces a predicted picture by using the motion vectors, together with the data read out under the control of the reference picture reading means 12. The decoding means 14 reproduces original frames by using the predicted picture. More specifically, the decoding means 14 reproduces the original picture by extracting coefficient data from the video stream 10, calculating difference data based on the extracted coefficient data, and adding that difference data to the predicted picture data. The reproduced picture data is then saved in the memory 2.

According to the above-described mechanism of the video decoding device 1, all reference picture data in the areas pointed by a plurality of motion vectors are read out of the memory 2 in a single access sequence, as a result of operation of the area setting means 11 and reference picture reading means 12. With this feature of the invention, the memory read operation can be achieved with fewer access cycles, compared with the case where a read access occurs for each area pointed by a motion vector. It is, therefore, more likely that the number of clock cycles required in memory reading, as well as the net amount of data read out of the memory 2, can be reduced. The present invention alleviates the processing load of decoding, making it possible to decode highly-compressed, high-quality pictures without the need for raising the operating frequency. The present invention thus provides a high-performance, low-power decoder device. The present invention becomes more advantageous in the case where a frame has to be partitioned into many unit areas for motion compensation, or in the case where filtering is required in reading reference pictures.

The following sections will give more specific explanations for the embodiments of the present invention.

### [Decoder Circuit Structure]

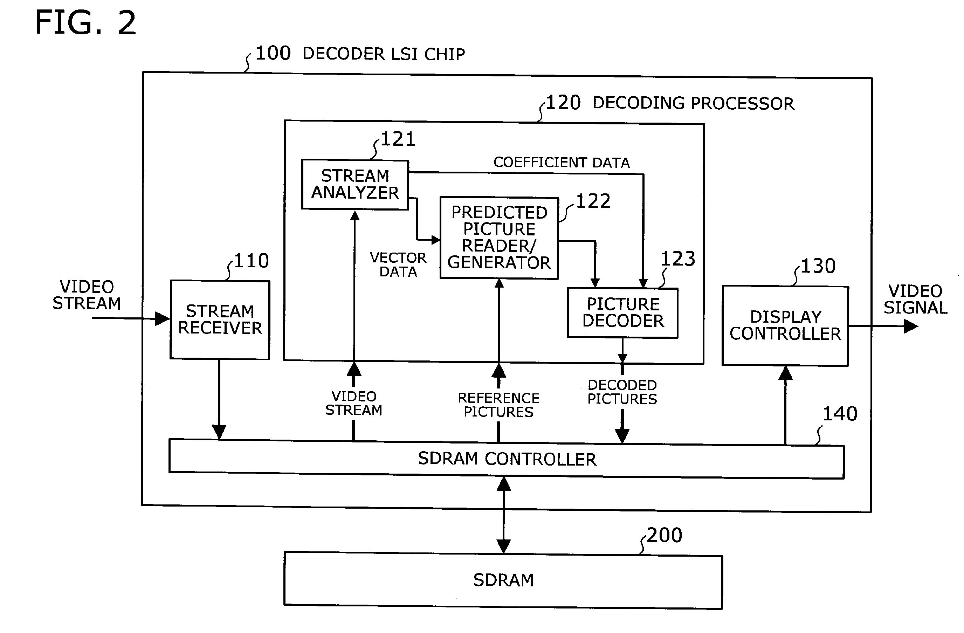

FIG. 2 is a block diagram showing an internal structure of a decoder LSI (large scale integration) chip according to an embodiment of the present invention.

The decoder LSI chip 100 shown in FIG. 2 decodes and decompresses a motion video stream complying with MPEG, H.26x, or other video coding standards. The decoder LSI chip 100 may be implemented as part of a video player/recorder, camcorder, or other device having video playing functions. This decoder LSI chip 100 includes a stream receiver 110, a decoding processor 120, a display controller 130, and an SDRAM controller 140. The stream receiver 110 receives a video stream, and the decoding processor 120 decodes the received video structure. The display controller 130 produces a video signal from decoded picture data. The SDRAM controller 140 serves as an interface to a synchronous dynamic random access memory (SDRAM) 200 coupled to the decoder LSI chip 100. The SDRAM 200 is used as a work area in a series of decoding tasks.

The illustrated decoder LSI chip 100 operates as follows. Upon receipt of a video stream, the stream receiver 110 sends it to the SDRAM 200 via the SDRAM controller 140. The decoding processor 120 decodes the video stream while reading it out of the SDRAM 200. The decoding processor 120 writes the resulting decoded pictures back into the SDRAM 200. To decode frames encoded with motion-compensated prediction techniques, the decoding process reads some previously decoded frames in the SDRAM 200 for use as reference pictures in decoding a current picture. The display controller 130 reads out decoded pictures stored in the SDRAM 200 in the order that they are displayed and outputs them to a video interface circuit (not shown) or the like in the form of video output signals.

The decoding processor 120 is formed from a stream analyzer 121, a predicted picture reader/generator 122, and a picture decoder 123. The stream analyzer 121 reads a stored video stream from the SDRAM 200 through the SDRAM controller 140 and extracts motion vectors, discrete cosine transform (DCT) coefficients, and other data necessary for the subsequent decoding tasks.

The predicted picture reader/generator 122 determines a read area on a reference picture, based on the motion vectors and other data extracted from the video stream. The predicted picture reader/generator 122 reads data corresponding to the determined read area from the SDRAM 200 and then produces a predicted picture based on that data. More specifically, the predicted picture reader/generator 122 determines a read area so as to contain all areas pointed by a plurality of motion vectors and performs a continuous access sequence to the SDRAM 200 so as to read the determined read area, as will be described in detail later. This type of read control is referred to herein as "collective read control."

The picture decoder 123 reproduces prediction error by performing dequantization and inverse DCT conversion on the coefficient data extracted by the stream analyzer 121. The picture decoder 123 then adds the prediction error to the predicted picture data supplied from the predicted picture reader/generator 122. The resulting decoded picture is stored in the SDRAM 200.

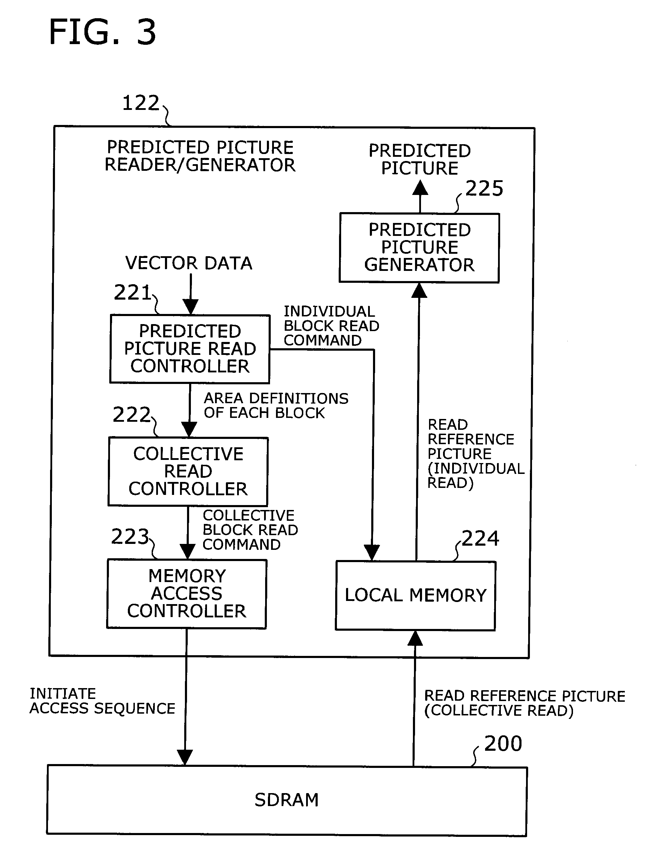

FIG. 3 is a block diagram showing an internal structure of the predicted picture reader/generator.

As FIG. 3 shows, the predicted picture reader/generator 122 is formed from a predicted picture read controller 221, a collective read controller 222, a memory access controller 223, a local memory 224, and a predicted picture generator 225.

The predicted picture read controller 221 informs the collective read controller 222 of which picture areas are pointed by the motion vectors of each block, based on the motion vectors extracted from a video stream and the information about unit blocks for motion-compensated prediction. The predicted picture read controller 221 also commands the local memory 224 to output reference picture data of each individual block.

As will be described later, the collective read controller 222 determines a read area on a reference picture so as to contain all areas pointed by a plurality of motion vectors and specifies that read area to the memory access controller 223. The memory access controller 223 initiates a read sequence to read data from the specified area of the SDRAM 200 and send it to the local memory 224. Note that the data in the specified read area is read out of the SDRAM 200 in a single access sequence.

The data read out of the above read area of the SDRAM 200 is stored temporarily in the local memory 224. This local memory 224 supplies the predicted picture generator 225 with its stored data corresponding to individual blocks of motion-compensated prediction, according to commands from the predicted picture read controller 221. The predicted picture generator 225 produces a predicted picture from such picture data supplied from the local memory 224.

The predicted picture reader/generator 122 executes collective read control by using the functions of the collective read controller 222 and memory access controller 223, thereby loading reference picture data from a collective read area (i.e., the read area containing all areas pointed by a plurality of motion vectors). The picture data read out of the SDRAM 200 is stored in the local memory 224 for subsequent use. Specifically, the predicted picture read controller 221 controls read operation of picture data corresponding to each unit block of motion-compensated prediction. The data of those blocks is supplied individually to the predicted picture generator 225 to construct a predicted picture.

### [Basic Operation of Collective Read Control]

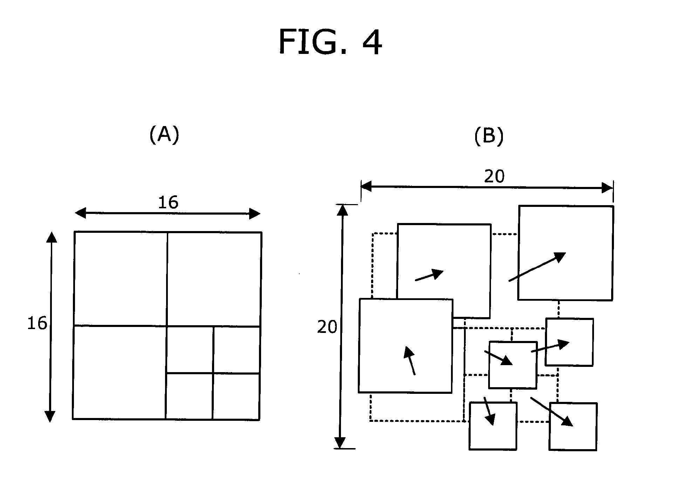

This section describes in greater detail the collective read control mentioned above. Note that the following description assumes that a collective read area is determined for each macroblock with a size of 16x16 pixels. FIG. 4 shows an example of macroblock partitioning.

In the case of H.264, for example, a macroblock can be partitioned into up to sixteen blocks for use as data elements of chrominance-based motion-compensated prediction. Referring to the example shown in FIG. 4(A), a macroblock is partitioned into four blocks, and one of them is further divided into four blocks, thus subjecting seven blocks to a coding process with motion-compensated prediction. FIG. 4(B) shows reference picture areas pointed by motion vectors calculated at individual blocks. This example illustrates seven areas of a reference picture which are pointed by seven motion vectors associated with one macroblock. FIG. 4(B) shows that all those seven areas are contained in a reference picture area with a size of 20x20 pixels.

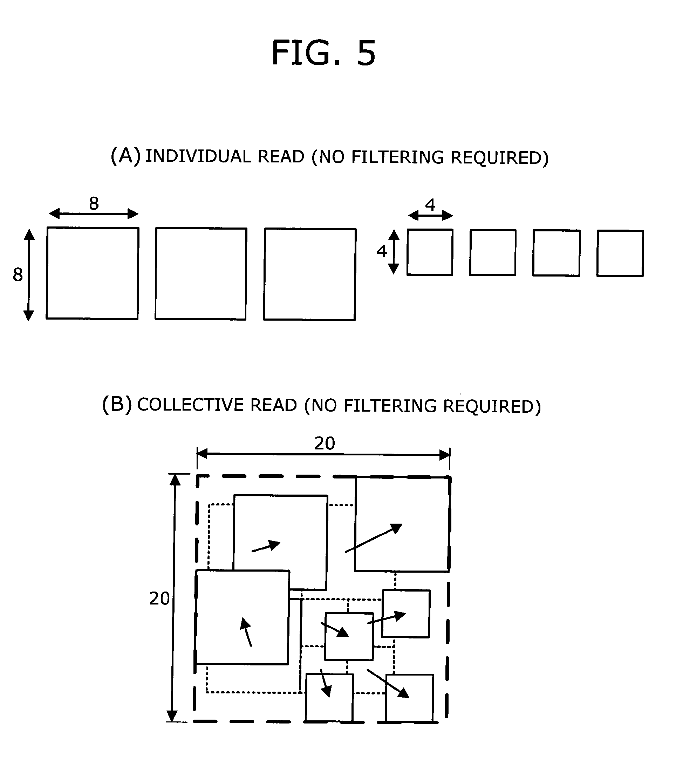

FIG. 5 shows how data is read out of reference picture areas corresponding to a macroblock.

As discussed above with reference to FIG. 4, the macroblock is divided into three 8x8 pixel blocks and four 4x4 pixel blocks. To produce a predicted picture from motion vectors of those blocks, it is necessary to read as large areas of a reference picture as corresponding portions of the macroblock, as depicted in FIG. 5(A). Conventionally, the data of those reference picture areas are read out of the SDRAM 200 individually for use in a motion-compensated prediction process. That is, the conventional way of reading a reference picture requires an access sequence to the SDRAM 200 to be repeated seven times, i.e., three times for the 8x8 pixel blocks and four times for the 4x4 pixel blocks.

Suppose now that each pixel of a decoded picture has a data size of one byte, while each word of the SDRAM 200 has a width of four bytes. This means that every word of the SDRAM 200 accommodates four pixels that are horizontally adjacent. Since the boundaries between blocks may not always coincide with those of memory words, it is necessary to read a maximum of 24 words (i.e., 3 words (=12 pixels) x 8) out of the SDRAM 200 for prediction of each 8x8 pixel area. Likewise, it is necessary to read a maximum of 8 words (i.e., 2 words (=8 pixels) x 4) for prediction of each 4x4 pixel area.

Conventionally, a separate access sequence is initiated to read a reference picture area corresponding to each block constituting a macroblock. The number of such read cycles per macroblock amounts to 104+6M cycles (i.e., 24x3 + 8x4 + 6M), assuming that every single access sequence to the SDRAM 200 incurs overhead equivalent to M word read cycles.

Unlike the above, the collective read control according to the present embodiment defines a collective read area that encompasses basically all reference picture areas pointed by the motion vectors as shown in FIG. 5(B). This collective read area has a size of 20x20 pixels as can be seen from FIG. 5(B). Specifically, the collective read controller 222 defines this collective read area based on the information about areas of divided blocks, together with motion vectors. The memory access controller 223 reads out reference picture data in the collective read area from the SDRAM 200 in a single access sequence. Preferably, the collective read area has a rectangular shape because of ease of memory access.

In the case of the 20x20 collective read area mentioned above, the SDRAM 200 outputs 120 words (6 words (24 pixels) x 20) in a single access sequence. If the number M of overhead cycles per access sequence is greater than 2.67 (=(120-104)/6), the proposed collective read control will be advantageous in terms of the number of read cycles per macroblock. The above condition is actually satisfied in many systems using ordinary SDRAMs. Accordingly, the collective read control contributes to faster reading of reference picture data for use in motion compensation of a macroblock.

Notice that, in the example of FIG. 5, each motion vector points to a different direction. For this reason, the collective read control results in a greater amount of read data per macroblock. In general, however, closely located blocks (e.g., those in the same macroblock) tend to have similar motion vectors. Some motion vectors may even point to the same reference picture area. If this is the case, the collective read area becomes much smaller, making it more likely that its net amount of read data can be reduced relative to the conventional case. The present embodiment reduces the amount of data that should be read out of the SDRAM 200, thus alleviating the processing load of read access. Accordingly, the proposed techniques accelerate decoding without the need for raising the operating frequency or expanding the bandwidth of bus connection to the SDRAM 200.

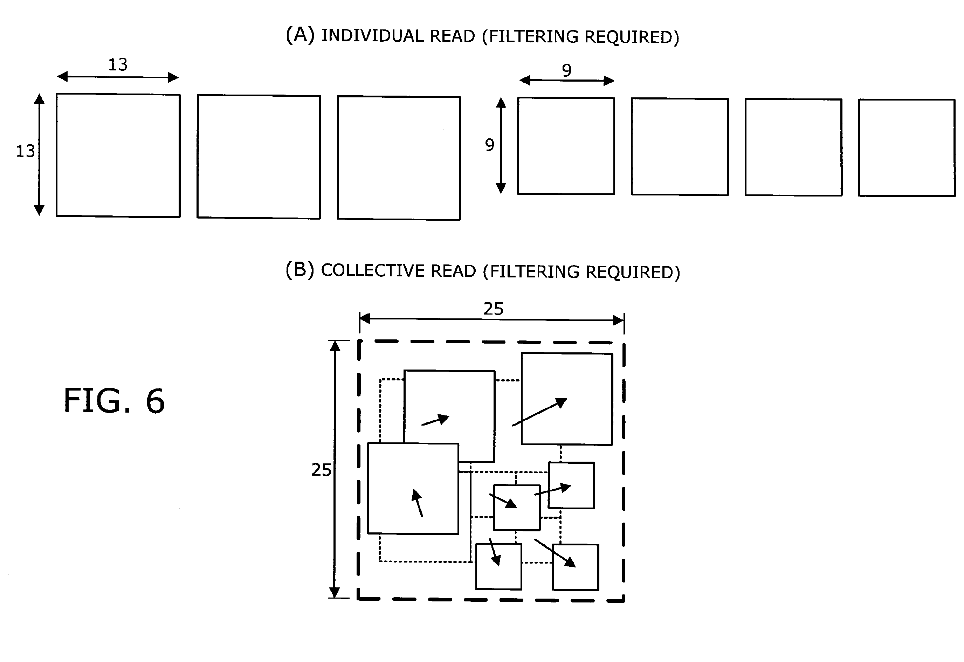

H.264 standard requires in some cases a filter with many taps when reading reference pictures for motion compensation. FIG. 6 shows reference picture areas to be read out in the case where filtering is required.

Specifically, FIG. 6 shows what areas of a reference picture should be read out of memory for use in motion-compensated prediction with half-pixel accuracy, assuming that every read area is subjected to 6-tap filtering. FIG. 6(A) shows the case of individual read, where the areas pointed by motion vectors will be read separately. Specifically, it is necessary to read data in a 13x13 pixel area from the SDRAM 200 to produce a predicted picture corresponding to an 8x8 pixel block. Likewise, it is necessary to read data in a 9x9 pixel area to produce a predicted picture corresponding to a 4x4 pixel block.

To read a 13x13 pixel area, it is necessary to read a maximum of 52 words (=4 words x 13) from the SDRAM 200. Likewise, to read a 9x9 pixel area, it is necessary to read a maximum of 27 words (=3 words x 9). Accordingly, the total number of read cycles amounts to 264+6M cycles (=52x3+27x4+6M) per macroblock.

In contrast to the above, the present embodiment applies collective read control to define a collective read area, which is basically a rectangular area with a size of 25x25 pixels as shown in FIG. 6(B). The collective read control permits in this case 175 words (=7 words x 25) of reference picture data to be read out of the SDRAM 200 in a single access sequence. This feature of the present embodiment greatly reduces the amount of read data and the number of read access cycles, compared with the case where a separate read access is initiated for each area pointed by the motion vectors.

Accordingly, the proposed decoding device can decode a video stream at a higher speed, without the need for raising the operating frequency, even if its encoding involves a filtering process to achieve highly efficient and accurate data compression. The present invention offers a high-performance decoder circuit that can encode high-quality videos with a low power consumption. The proposed mechanism of high-speed decoding also makes it easier to provide performance-intensive special functions such as double-speed playback of a video stream.

### [First Example of Collective Read Control]

As mentioned earlier, closely located blocks tend to have similar motion vectors. However, if the motion vectors point to distant areas in different directions, the resulting collective read area will be extremely large.

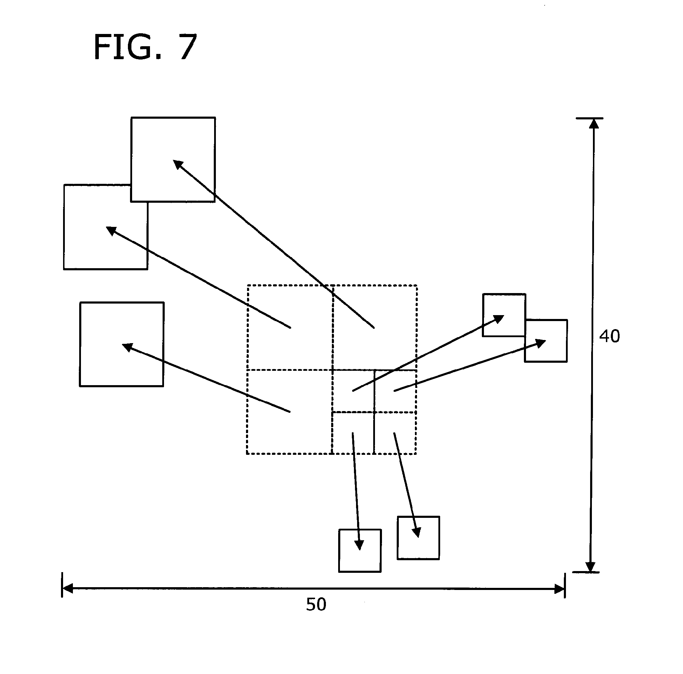

FIG. 7 shows an example of a large-sized collective read area.

Specifically, FIG. 7 shows a collective read area with a size of 50x40 pixels, which is derived from a 16x16 pixel macroblock partitioned in the way shown in FIG. 4(A). This collective read area is defined to contain every area pointed by the motion vectors. It is necessary in this example to read a maximum of 520 words (=13 words x 40) from the SDRAM 200, even assuming that no filtering is required in reading reference pictures. The conventional technique, on the other hand, reads data from individual areas corresponding to motion vectors. Specifically, it always takes 104+6M read cycles as described earlier, since the total amount of read data is fixed, no matter how the areas are distributed. If the number M of overhead cycles is small enough to satisfy 104+6M < 540, the use of collective read control will no longer be advantageous in terms of the number of read cycles.

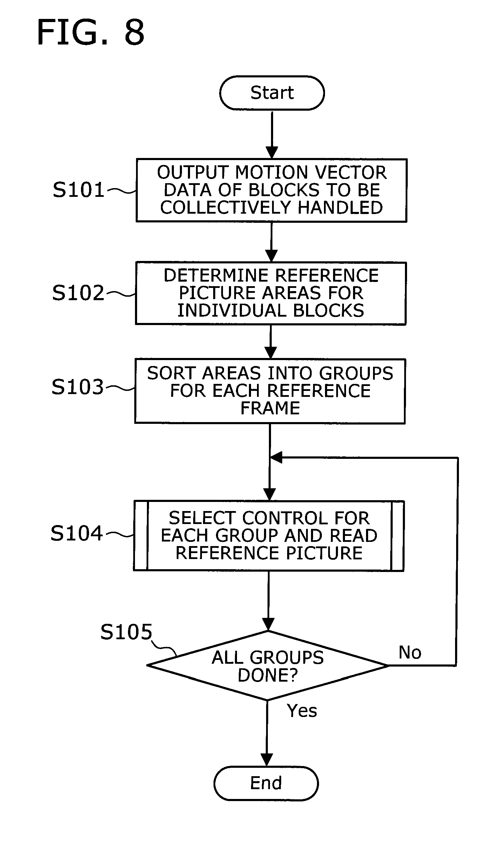

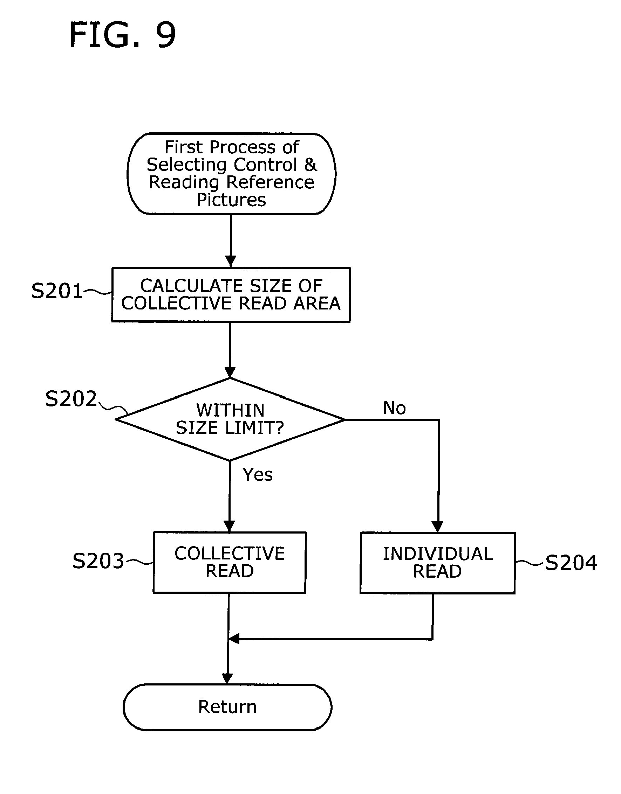

To address the above problem, a pair of thresholds Lx and Ly are provided to set a meaningful collective read area. Specifically, if the collective read area in question has a horizontal size and vertical size exceeding their respective thresholds, Lx and Ly, then the present embodiment abandons the use of that collective read area and, instead, reads out the pointed areas individually. The following section will describe a specific process executed in this case, with reference to FIGS. 8 and 9.

FIG. 8 is a flowchart showing a total process of reading reference picture data suitably for H.264. The process shown in FIG. 8 is supposed to read reference picture data corresponding to one macroblock.

The predicted picture reader/generator 122 first activates its predicted picture read controller 221 to receive data that the stream analyzer 121 has extracted from a given video stream. The extracted data includes motion vectors, area definitions of corresponding blocks, reference frame information, and the like. The predicted picture read controller 221 then supplies the collective read controller 222 with the motion vectors of blocks, definition of area of each block, and information on reference frames (step S101). Note that those blocks are part of the same macroblock and thus will be subjected to determination of whether it is appropriate to handle them collectively.

Based on the data supplied from the predicted picture read controller 221, the collective read controller 222 examines each individual block to figure out which part of the reference picture should be read (step S102). That is, the collective read controller 222 determines a reference picture area pointed by the motion vector of each block. In the case where filtering is involved in the process of reading reference picture data, the collective read controller 222 takes into consideration as many reference picture areas as required by the filtering.

Subsequently, the collective read controller 222 sorts the determined reference picture areas into groups according to their reference frames (step S103). The collective read controller 222 then examines each group of reference picture areas in various aspects of collective read control, thereby determining whether to select collective read control or individual read control. The collective read controller 222 executes the selected read control so as to read out reference picture data from the SDRAM 200 to the local memory 224 (step S104). In the case of individual read control, reference picture data is read out individually for each motion vector.

Upon reading the reference picture for one group, the process returns to step S104 and subjects another group to the above processing. When all groups are finished, it means the end of reading reference pictures for one macroblock (step S105). H.264 standard allows the encoder to change reference frames at each 8x8 pixel block, and accordingly the motion estimator may refer to up to eight frames per macroblock in the case of bidirectional prediction. For this reason, the loop of steps S104 to S105 may be repeated up to eight times.

FIG. 9 is a flowchart showing a first example of step S104 of FIG. 8, i.e., the step of selecting control and reading reference pictures.

The collective read controller 222 consults information about reference picture areas determined at step S102 of FIG. 8 and chooses an appropriate piece of information describing a group of areas that it is going to process. The collective read controller 222 then examines the coordinates of each reference picture area's left, top, right, and bottom edges, thus calculating the size of a rectangular collective read area that encompasses all reference picture areas in the selected group (step S201). The collective read controller 222 now compares the horizontal and vertical sizes of the collective read area with their corresponding threshold values Lx and Ly (step S202).

If the collective read area falls within the range defined by the above threshold values, the collective read controller 222 commands the memory access controller 223 to read reference picture data in that collective read area in a single access sequence (step S203). This operation causes the specified picture data to be read out of the SDRAM 200 and sent to the local memory 224. If the collective read area lies off the range defined by the above threshold values, the collective read controller 222 informs the memory access controller 223 of each reference picture area pointed by motion vectors in the selected group, thus causing reference picture data in each area to be sent from the SDRAM 200 to the local memory 224 one by one (step S204).

The process shown in FIG. 9 reads out data of each area from the SDRAM 200 individually with a separate access sequence in the case where the use of a collective read area is expected to produce more read cycles than the individual read control does. As discussed earlier in FIG. 7, this case happens when the motion vectors point to distant areas in different directions. The proposed feature thus prevents the number of read cycles from increasing too much, thus enabling faster decoding of video streams without the need for raising the operating frequency.

### [Second Example of Collective Read Control]

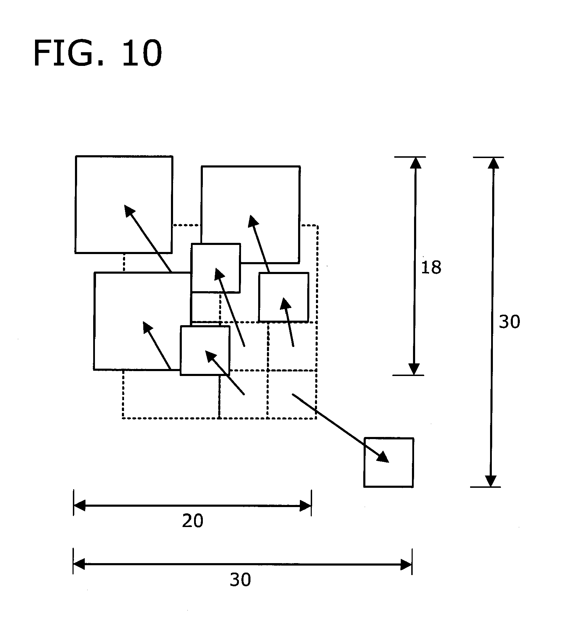

FIG. 10 shows motion vectors of a macroblock, one of which solely points to a distant area while the other vectors can be handled collectively.

The example of FIG. 10 includes seven blocks deriving from a macroblock, six of which have their motion vectors pointing somewhere in a relatively small area (i.e., the 18x20 pixel area at the top-left corner of FIG. 10) while the remaining one block alone has a motion vector pointing to a far distant area (i.e., the bottom-right corner). Even in this case, a collective read area may be defined to encompass all areas pointed by the seven motion vectors. However, the size of such a collective read area would be as large as 30x30 pixels, and the data words that have to be read out of the SDRAM 200 would amount up to 240 words (=8 words x 30), meaning that the read access takes 240 cycles. The foregoing process of FIG. 9 may select individual read control in this case since the 30x30 collective read area exceeds the size defined by threshold values. The number of required read cycles will then be 152 (=104+6M), assuming that the number M of overhead cycles is 8.

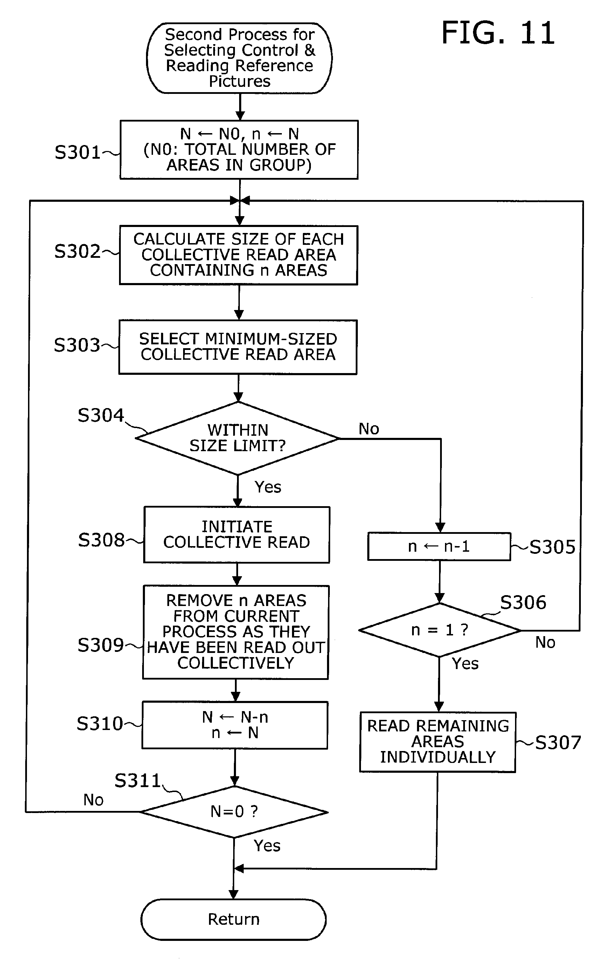

As can be seen from the above, the foregoing algorithm of collective read control would produce too many read cycles in the case where only one or a few of the motion vectors of a macroblock point to a far distant area, as opposed to the case where all motion vectors points to far distant areas as shown in FIG. 7. This would also be true in the case where the motion vectors form a few groups that point to separate, relatively small areas. To address this problem, the next example process shown in FIG. 11 creates a collective read area by combining relatively close areas pointed by at least one motion vectors. This algorithm is expected to reduce the number of required read cycles even in the cases discussed above.

FIG. 11 is a flowchart showing a second example of step S104 of FIG. 8, which selects control and reads reference pictures.

Let N be a variable indicating the number of unexamined reference picture areas in a selected group, N0 be the total number of reference picture areas in the same group, and n be a variable indicating the number of reference picture areas in a collective read area to be defined. To examine all reference picture areas in the group, the collective read controller 222 first assigns N0 to N, as well as N to n (step S301). The subsequent steps S302 to S311 are supposed to be repeated until the number N of remaining reference picture areas becomes zero.

At the outset, the collective read controller 222 creates possible rectangular collective read areas containing n reference picture areas and calculates their respective sizes (step S302). The initial collective read area contains all reference picture area pointed by the motion vectors in a group. As in the foregoing step S202 of FIG. 9, this step S302 considers as many areas as required by a filtering process if it is involved in reading reference pictures.

The collective read controller 222 then selects a minimum-sized collective read area from among those created at step S302 (step S303) and compares its horizontal and vertical sizes with threshold values Lx' and Ly', respectively (step S304). If this comparison reveals that the collective read area lies off the range defined by the threshold values, then the collective read controller 222 decrements the variable n by one, where n represents the number of reference picture areas to be contained in a collective read area (step S305). The collective read controller 222 determines whether n is one (step S306). If the resulting n is not one, the process returns to step S302. If the resulting n is one, it means that the remaining areas cannot be combined. Accordingly, the collective read controller 222 commands the memory access controller 223 to read reference picture data in those areas out of the SDRAM 200 and sends them to the local memory 224 individually (step S307).

If it is determined at step S306 that n is not one (i.e., n is two or more), the collective read controller 222 produces as many collective read areas as possible, with the decremented number n of reference picture areas, and calculates their respective sizes (step S302). The collective read controller 222 selects a minimum-sized area (step S303). If the selected area falls within a predetermined size defined by the threshold values (step S304), then the collective read controller 222 commands the memory access controller 223 to read data in that collective read area from the SDRAM 200 to the local memory 224 in a single access sequence (step S308).

The collective read controller 222 removes the n reference picture areas from the present process as they have been finished at step S308 (step S309). The collective read controller 222 then decrements N by n, thus updating the number N of unfinished reference picture areas. The collective read controller 222 also substitutes this new N for n, the number of reference picture areas that a collective read area is allowed to contain (step S310). Further, the collective read controller 222 determines whether N is zero (step S311). If N is zero, it indicates that all the reference picture areas in the selected group are finished, and the process is thus to be terminated. If N is not zero, it means that there are some unfinished reference picture areas. Accordingly, the collective read controller 222 returns to step S302 to produce collective read areas for the remaining areas and evaluate a minimum-sized one with reference to threshold values.

The outcomes of the above processing are one or more collective read areas, each of which includes a plurality of reference picture areas in a group, besides falling within a predetermined size limit. Data in each such collective read area is read out of the SDRAM 200 in a single access sequence. Data in the other reference picture areas (i.e., areas not included in the collective read areas) is read out of the SDRAM 200 in a separate access sequence.

Suppose now that the threshold values used at step S304 are set as Lx'=24 and Ly'=20. Referring to the example blocks shown in FIG. 10, the six reference picture areas located at the top-left corner fall within an area with a size of 20x18 pixels. This area thus serves as a collective read area, which requires a maximum of 108 words (=6 words x 18) to be read out of the SDRAM 200. The remaining 4x4 pixel area at the bottom-right corner is read out of the SDRAM 200 in a separate access sequence, which is at most 8 words (=2 words x 4). The reference picture areas can be read with two access sequences. Assuming that the overhead N is 8 cycles per access sequence, the total number of read cycles will be 124 (=108+8+8). That is, the present embodiment reduces the number of required read cycles, as well as the total amount of read data, in comparison with the case where a single collective read area contains every reference picture area of a macroblock or where each reference picture area is read individually with a separate access sequence.

As can be seen from the above, the algorithm discussed in FIG. 11 always minimizes the number of read cycles required in reading reference pictures even in the case where one or a few of the motion vectors of a macroblock point to far distant areas, or where the motion vectors form several groups that point to separate, relatively small areas. Accordingly, the proposed algorithm can decode a video stream at a higher speed without the need for raising the operating frequency.

### [Third Example of Collective Read Control]

This section describes an application of the foregoing collective read control to decoding of a video stream coded in accordance with the MPEG-4 Simple Profile specification. Decoder LSI chips for such video streams can be realized basically by using functions similar to what the foregoing decoder LSI chip 100 offers (see FIGS. 2 and 3). The MPEG-4 Simple Profile specification restricts macroblock partitioning to two patterns: four blocks or one block (i.e., no partitions). In addition, the specification only allows reference to a single frame of picture.

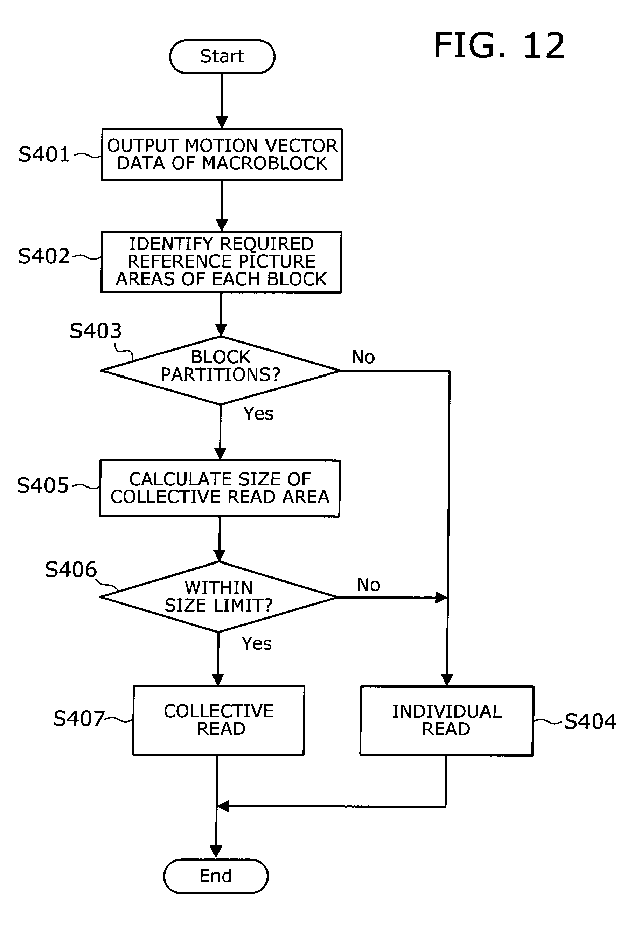

Referring first to FIG. 12, an example of a processing algorithm will be described below, which is suitable for the case where motion vectors of a macroblock point to distant areas in different directions as discussed earlier in FIG. 7. This example is comparable to the processes discussed in FIGS. 8 and 9.

FIG. 12 is a flowchart showing a first example process of reading reference picture data suitably for MPEG-4 simple profile. As in the case of FIG. 8, the process shown in FIG. 12 is supposed to read reference picture data corresponding to one macroblock.

The predicted picture reader/generator 122 first activates its predicted picture read controller 221 to receive data that the stream analyzer 121 has extracted from a given video stream, which includes motion vectors, area definitions of corresponding blocks, and the like. The predicted picture read controller 221 then supplies the collective read controller 222 with the motion vectors of blocks and the area definitions of each block (step S401), where the "blocks" refer to a macroblock or its partitions and thus will be subjected to determination of whether to process them collectively.

Based on the data supplied from the predicted picture read controller 221, the collective read controller 222 examines each individual block to figure out which part of the reference picture should be read (step S402). The collective read controller 222 then determines whether the macroblock is partitioned (step S403). If no partitions are found, the collective read controller 222 commands the memory access controller 223 to perform a single read sequence on the SDRAM 200 so as to read reference picture data corresponding to the entire macroblock (step S404). The macroblock in this case has only one motion vector, and the data in a reference picture area pointed by that vector is read out of the SDRAM 200 and sent to the local memory 224.

If step S403 finds block partitions, the collective read controller 222 produces a collective read area containing reference picture areas of those blocks. The collective read controller 222 then examines the coordinates of left, top, right, and bottom edges of each reference picture area, so as to calculate the size of a rectangular collective read area that encompasses all those reference picture areas (step S405). The collective read controller 222 now compares the horizontal and vertical sizes of the collective read area with their respective threshold values (step S406).

If the collective read area falls within the range defined by the above threshold values, the collective read controller 222 commands the memory access controller 223 to read reference picture data in that collective read area in a single access sequence (step S407). This operation causes the corresponding image data to be read out of the SDRAM 200 and sent to the local memory 224. If the collective read area lies off the range defined by the above threshold values, the collective read controller 222 commands the memory access controller 223 to make access to the SDRAM 200 for each reference picture area pointed by motion vectors so as to read and send the data to the local memory 224 (step S404).

As in the process discussed earlier in FIG. 9, the above-described process reads out data of each area from the SDRAM 200 with a separate access sequence in the case where the use of a collective read area is expected to produce more read cycles than individual read control because the motion vectors point to distant areas in different directions. The proposed feature prevents the number of read cycles from increasing too much, thus enabling faster decoding of video streams without the need for raising the operating frequency.

In the case where a macroblock is divided into four blocks, the collective read controller 222 may produce a collective read area by combining relatively close areas pointed by at least one motion vectors in the way described earlier in FIGS. 10 and 11, while reading other solitary areas individually with a separate access sequence. This algorithm reduces the number of required read cycles even in the case where one or a few of the motion vectors of a macroblock point to far distant areas, or where the motion vectors form a few groups that point to separate, relatively small areas.

### [Fourth Example of Collective Read Control]

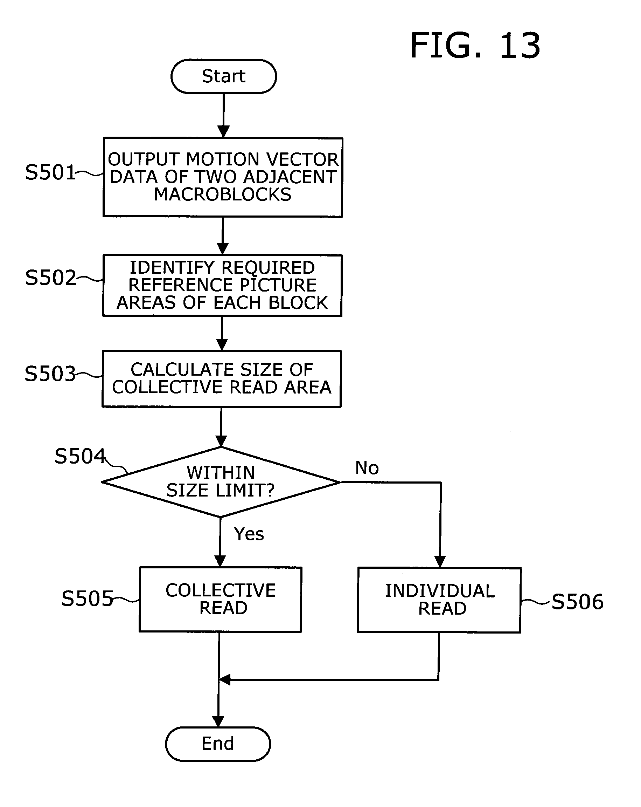

Referring now to FIG. 13, this section describes another example of video stream decoding according to the MPEG-4 Simple Profile, in which the determination of whether to apply collective read control is made on a plurality (e.g., two) of non-partitioned macroblocks adjacent to each other.

FIG. 13 is a flowchart showing a second example process of reading reference picture data suitably for MPEG-4 simple profile. This example process is supposed to read reference picture data corresponding to two adjacent macroblocks.

The predicted picture reader/generator 122 first activates its predicted picture read controller 221 to inform the collective read controller 222 of the motion vectors of two adjacent macroblocks (step S501), based on some information received from the stream analyzer 121. Here the two macroblocks are currently the subject of determination by the collective read controller 222.

Based on the data supplied from the predicted picture read controller 221, the collective read controller 222 examines which part of the reference picture each motion vector points to, thus determining reference picture areas to be read (step S502). The collective read controller 222 produces a collective read area containing reference picture areas of both macroblocks. The collective read controller 222 determines the coordinates of each reference picture area's left, top, right, and bottom edges to calculate the size of the rectangular collective read area that encompasses both reference picture areas (step S503).

The collective read controller 222 then compares the calculated horizontal and vertical sizes of the collective read area with corresponding threshold values (step S504). If the collective read area falls within the range defined by the threshold values, then the collective read controller 222 commands the memory access controller 223 to read data in that collective read area in a single access sequence (step S505). If the collective read area lies off the range defined by the above threshold values, the collective read controller 222 commands the memory access controller 223 to make access to the SDRAM 200 for each reference picture area pointed by the motion vectors (step S506).

Similar to the one shown in FIG. 12, the above algorithm always minimizes the number of required read cycles even in the case where the motion vectors point to distant areas in different directions. Accordingly, the proposed algorithm can decode a video stream at a higher speed without the need for raising the operating frequency.

### [Circuit Structure for Encoder Applications]

The present invention can be applied not only to video decoding devices, but also to video coding devices since both types of devices have the function of reading reference picture data from an external memory. As will be described later, MPEG and H.264 encoders read reference pictures to produce a predicted picture, in addition to reading reference pictures to estimate motion vectors. They also read chrominance components of a reference picture after motion vectors are calculated from luminance components alone. The proposed collective read control can be applied to those operations.

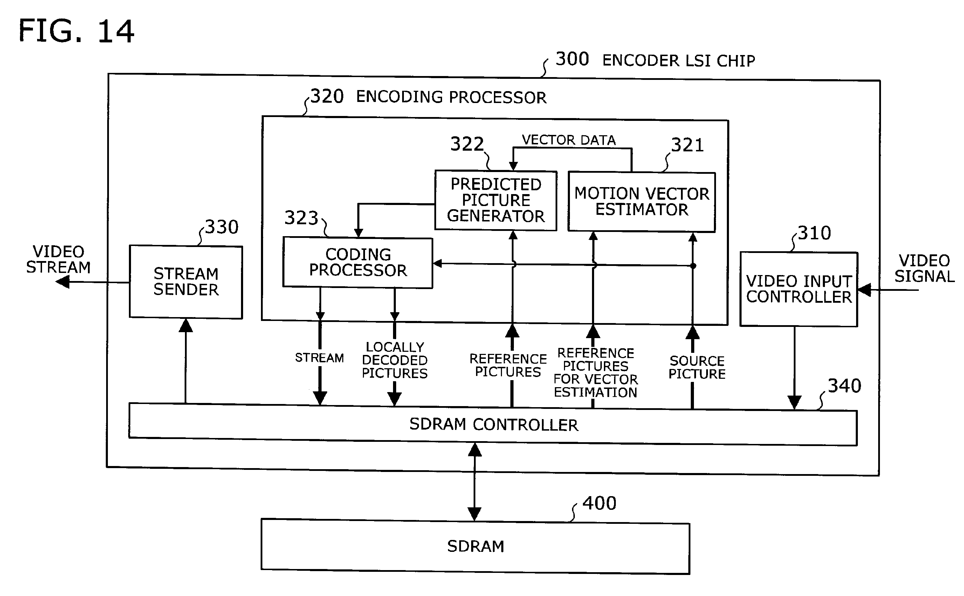

FIG. 14 is a block diagram showing essential part of an encoder LSI chip according to an embodiment of the present invention. This figure gives an overview of the inter-macroblock decoding functions according to MPEG and H.264 standards.

The encoder LSI chip 300 shown in FIG. 14 is designed to serve in a video recorder, camcorder, or other appliances with video recording capabilities. The encoder LSI chip 300 may also be used in a device with the functions of distributing video streams. This encoder LSI chip 300 has the following components: a video input controller 310 to receive a source video signal, an encoding processor 320 to encode pictures, a stream sender 330 to output an encoded video stream, and an SDRAM controller 340 serving as an interface with an SDRAM 400. The encoding process uses the SDRAM 400 as its work area.

The encoder LSI chip 300 operates as follows. The video input controller 310 supplies a received video signal to the SDRAM 400 through the SDRAM controller 340. The encoding processor 320 encodes video data read out of the SDRAM 400 via the SDRAM controller 340 and writes the resultant video stream back into the SDRAM 400. The stream sender 330 reads the video stream stored in the SDRAM 400 and outputs it to an external storage device or a network interface. Besides performing an encoding process, the encoding processor 320 produces locally decoded pictures and stores them in the SDRAM 400 for use in motion-compensated prediction. During the course of motion-compensated prediction, the encoding processor 320 reads some locally decoded pictures out of the SDRAM 400 for use as reference pictures, besides making access to the SDRAM 400 to read source pictures to be encoded.

The encoding processor 320 has a motion vector estimator 321 to calculate motion vectors, a predicted picture generator 322 to produce predicted pictures from those motion vectors, and a coding processor 323 to produce a coded data stream from the predicted pictures and source pictures.

To encode frames with motion-compensated prediction techniques, the motion vector estimator 321 makes access to the SDRAM 400 to read both source picture data and reference picture data (i.e., pictures locally decoded in the past) for use in motion-compensated prediction and calculates motion vectors from those data. Most motion vector estimation algorithms use a block matching technique or the like to produce a vector with a minimum prediction error between source and reference pictures.

The predicted picture generator 322 calculates a read area on a reference picture based on the motion vector data supplied from the motion vector estimator 321 and produces a predicted picture from the reference picture data read out of the SDRAM 400 according to the calculation result.

The coding processor 323 calculates a prediction error between the source picture and the corresponding predicted picture produced by the predicted picture generator 322. The coding processor 323 then subjects this prediction error to DCT transform and quantization, thereby producing a video stream complying with appropriate standard specifications. The resulting video stream is saved in the SDRAM 400. At the same time, the coding processor 323 applies dequantization and inverse DCT transform to the coded data, thus producing and saving locally decoded pictures in the SDRAM 400 for subsequent use.

The above process is arranged in such a way that the motion vector estimator 321 first reads a reference picture from the SDRAM 400 for motion vector estimation and then the predicted picture generator 322 reads out the same reference picture from the SDRAM 400. Since motion vectors are estimated for each partition of a macroblock, for example, the motion vector estimator 321 has only to read a series of divided blocks sequentially. In contrast, the predicted picture generator 322 has to read reference picture areas each calculated from a corresponding motion vector.

This means that there is room for speeding the process of producing predicted pictures by applying the foregoing collective read control to the predicted picture generator 322. In other words, it is possible to reduce the number of required read cycles by using collective read control to read reference pictures. For example, a collective read area may be defined to contain all reference picture areas corresponding to one reference picture, so that those areas can be read out of the SDRAM 400 in a single access sequence. Also, as discussed earlier in FIGS. 9 and 11, each produced collective read area may be evaluated in terms of effectiveness of collective read control. This feature ensures the high-speed processing in a wider variety of situations.

Motion vectors may be calculated from luminance components alone, in which case a predicted picture for chrominance components is produced later with reference to the resulting motion vectors. This means that the encoder has to read chrominance components of a reference picture for each area pointed by motion vectors after reading luminance components of the same. The foregoing collective read control can speed up the reading of chrominance components of reference pictures for the purpose of producing a predicted picture since it reduces the number of read cycles therefor.

As can be seen from the above, the present invention speeds up both decoding and encoding of video streams without the need for raising the operating frequency, since it reduces access cycles to the SDRAM 400, as well as the total amount of data to be read out. The present invention, therefore, realizes a device that can produce and/or replay a highly compressed, high-quality video stream with low power consumption. The proposed techniques can be applied to high-compression, high-quality video coding methods such as H.264, which are expected to be used widely in cellular phones, personal digital assistance (PDA) devices, and other products to implement video recording and/or playing functions. Since the proposed techniques enable low-power decoding, those mobile devices will achieve longer battery operation, thus allowing the users to enjoy video recording and/or playing for a longer time.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### [Description of Reference Numerals]

1: video decoding device
2: memory
10: video stream
11: area setting means
12: reference picture reading means
13: predicted picture generating means
14: decoding means

## Claims

1. A device for decoding a video stream encoded with motion-compensated prediction techniques, comprising:
area setting means for determining a read area on a reference picture so as to contain areas pointed by a plurality of motion vectors extracted from the video stream;
reference picture reading means for reading out, with a continuous access sequence to a memory, data of the reference picture corresponding to the read area determined by the area setting means, the reference picture being a picture previously decoded and stored in the memory;
predicted picture generating means for producing a predicted picture based on the data corresponding to the read area which has been read by the reference picture reading means; and
decoding means for reproducing an original picture by using the predicted picture produced by the predicted picture generating means.

2. The device according to claim 1, further comprising size comparing means for comparing size of the read area determined by the area setting means with a predetermined threshold value,
wherein the reference picture reading means reads out data of the reference picture corresponding to the read area with a continuous access sequence to the memory if the size comparing means indicates that the size of the read area falls within the threshold, and
wherein the reference picture reading means reads out data of the reference picture corresponding to each area pointed by the motion vectors with an individual access sequence to the memory if the size comparing means indicates that the size of the read area exceeds the threshold.

3. The device according to claim 1, further comprising:
size comparing means for comparing size of the read area determined by the area setting means with a predetermined threshold value; and
read controlling means for commands the reference picture reading means to read out data of the reference picture corresponding to the read area with a continuous access sequence to the memory if the size comparing means indicates that the size of the read area falls within the threshold, while reading out, with an individual access sequence to the memory, data of the reference picture corresponding to other areas pointed by the motion vectors which lie off the determined read area.

4. The device according to claim 3, wherein:
if the size comparing means indicates that the size of a first read area determined by the area setting means exceeds the threshold, the read controlling means commands the area setting means to produce a second read area containing areas pointed by fewer motion vectors; and
if the size comparing means indicates that the size of the second read area falls within the threshold, the read controlling means commands the reference picture reading means to read out data of the reference picture corresponding to the second read area, with a continuous access sequence to the memory.

5. The device according to claim 3, wherein:
the read control means commands the area setting means to repeat a process of producing a new read area from remaining reference picture areas outside existing read areas, as long as the size comparing means indicates that the size of each produced read area falls within the threshold; and
the read control means commands the reference picture reading means to read out data of the reference picture corresponding to each produced read area with a continuous access sequence to the memory, while reading out, with an individual access sequence to the memory, data of the reference picture corresponding to other areas pointed by the motion vectors which lie off the read areas.

6. The device according to claim 1, further comprising:
a local memory storing the data that the reference picture read controlling means has read out of the memory with respect to the read area; and
the predicted picture generating means produces the predicted picture by reading the data stored in the local memory for each area pointed by the motion vectors.

7. The device according to claim 1, wherein the motion vectors that the area setting means uses to determine the read area are motion vectors contained in one or a plurality of macroblocks adjacent to each other.

8. The device according to claim 1, wherein the read area has a rectangular shape.

9. A device for encoding video signals by using motion-compensated prediction techniques, comprising:
motion estimation means for performing motion estimation on data of a source picture and a reference picture which are read out of a memory;
area setting means for determining a read area on the reference picture so as to contain areas pointed by a plurality of motion vectors calculated from results of the motion-compensated prediction performed by the motion estimation means;
reference picture reading means for reading out, with a continuous access sequence to the memory, data of the reference picture corresponding to the read area determined by the area setting means;
predicted picture generating means for producing a predicted picture based on the data corresponding to the read area which has been read out by the reference picture reading means;
coding means for producing a video stream by performing a coding process on data of the predicted picture produced by the predicted picture generating means and data of the source picture; and
decoding means for decoding pictures encoded by the coding means and storing the decoded pictures in the memory for use as reference pictures.

10. The device according to claim 9, wherein the predicted picture generating means reads data corresponding to the read area from the same picture data in the memory as the motion estimation means has read.

11. The device according to claim 9, wherein:
the motion estimation means performs motion estimation on luminance data of the source picture and reference picture read out of the memory;
the area setting means determines a read area on the reference picture so as to contain areas pointed by a plurality of motion vectors of chrominance data which are calculated from results of the motion-compensated prediction performed by the motion estimation means;
the reference picture reading means reads out, with a continuous access sequence to a memory, chrominance data of the reference picture corresponding to the read area determined by the area setting means;
the predicted picture generating means produces a predicted picture based on the chrominance data corresponding to the read area which has been read out by the reference picture reading means; and
the coding means produces a video stream by performing a coding process on data of the predicted picture produced by the predicted picture generating means and chrominance data of the source picture.

12. A method of decoding a video stream that is encoded with motion-compensated prediction techniques, the method comprising the steps of:
determining, with an area setting means, a read area on a reference picture so as to contain areas pointed by a plurality of motion vectors extracted from the video stream;
reading out, with a reference picture reading means, data of the reference picture corresponding to the read area determined by using the area setting means, by performing a continuous access sequence to a memory, the reference picture being a picture previously decoded and stored in the memory;
producing, with a predicted picture generating means, a predicted picture based on the data corresponding to the read area which has been read out by using the reference picture reading means; and
reproducing, with a decoding means, an original picture by using the predicted picture produced by using the predicted picture generating means.
